Europäisches Patentamt

European Patent Office

Office européen des brevets

(19)

(11) Veröffentlichungsnummer: **0 159 675**
**B1**

(12) **EUROPÄISCHE PATENTSCHRIFT**

(45) Veröffentlichungstag der Patentschrift: **09.01.91**

(51) Int. Cl.⁵: **H 04 N 1/46**

(21) Anmeldenummer: **85104751.4**

(22) Anmeldetag: **19.04.85**

(54) **Verfahren zum farbigen Ausdrucken eines durch additive Farbmischung auf dem Bildschirm eines Monitors abgebildeten Fernsehbildes durch subtraktive Farbmischung.**

(30) Priorität: **25.04.84 DE 3415320**

(43) Veröffentlichungstag der Anmeldung:
**30.10.85 Patentblatt 85/44**

(45) Bekanntmachung des Hinweises auf die
Patenterteilung:
**09.01.91 Patentblatt 91/02**

(84) Benannte Vertragsstaaten:
**AT BE CH FR GB IT LI NL SE**

(56) Entgegenhaltungen:
**EP-A-0 050 481**
**CH-A- 568 593**
**DE-A-1 771 422**
**DE-A-3 145 535**
**GB-A-1 001 433**
**US-A-3 247 816**

**ELECTRONIC DESIGN, Band 30, Nr. 22, Oktober
1982, Seiten 151-158, Waseca, Denville, US; S.
COX et al.: "Color graphics printers 'slip into'
computer systems"**

(73) Patentinhaber: **LOEWE OPTA GMBH**
**Industriestrasse 11 Postfach 220**
**D-8640 Kronach (DE)**

(72) Erfinder: **Landeck, Hubert, Dipl.-Ing.**
**Kaulangerstrasse 6**
**D-8640 Kronach (DE)**

Courier Press, Leamington Spa, England.

**Beschreibung**

Die Erfindung betrifft ein Verfahren zum Ausdrucken eines farbigen Fernsehbildes durch subtraktive Farbmischung nach dem Oberbegriff des Anspruchs 1.

Es ist bekannt, durch additive Farbmischung der Basisfarben Rot, Grün, Blau auf dem Bildschirm einer Bildröhre eines Monitors oder Fernsehempfangsgerätes ein farbiges Bild darzustellen. Das Auge vermag nicht die gleichzeitig auftreffenden Strahlungen verschiedener Wellenlängen nach Farben zu trennen; es erfaßt das Lichtgemisch als eine selbständige Farbe. Entsprechend den Anteilen (Intensitätsgrad) der Farben, die meßbar und in Intensitätsstufen N quantisierbar sind, lassen sich durch additive Farbmischung die verschiedensten Farben und Farbnuancen darstellen.

Beim Bildschirmtext werden farbbildliche Informationen quantisiert als codierte Mehrbit-Informationen über das Telefonnetz übertragen. Ein für die Abarbeitung der Daten und für die Displayansteuerung vorgesehener Decoder decodiert die empfangenen Signale und setzt sie in analoge Signale um, die die Katoden einer Mehrfarben-Katodenstrahlröhre steuern, auf deren Bildschirm die einzelnen Farbpunkte wiedergegeben werden. Die Norm sieht eine Abstufung des Attributes Farbe in 16 Intensitätsstufen vor, woraus rechnerisch maximal 4069 Mischfarben abgeleitet werden können. Die Farbmischung wird durch unterschiedliche Intensitätsansteuerung der verchiedenen Phosphorschichten auf dem Bildschirm erzeugt. Das Farbgemisch muß dabei keine charakteristische Wellenlänge aufweisen, das Auge nimmt sie jedoch als solche wahr. Z.B. ergibt das additive Farbgemisch Blau/Rot die Farbe Purpur.

Bei der subtraktiven Farbmischung, wie sie beim Mehrfarbendruck, in der Malerei und in der Fototechnik angewendet wird, macht man sich hingegen die Lichtreflektionen der verschiedenen Farbstoffe für die Erzeugung von Mischfarben nutzbar. Mit den Farben Gelb, Magenta und Cyan lassen sich dabei praktisch alle Farbkombinationen mischen. Die Farbstoffe reflektieren das Licht, das auf sie fällt, vorzugsweise in einem bestimmten Spektralbereich, während die übrigen Strahlungen von ihnen absorbiert werden.

Aus der Mehrfarbendrucktechnik ist es bekannt, entweder die Farben in gemischter Form auf einem weißen Druckträger (Papier) aufzubringen oder die Grundfarben Gelb, Cyan, Magenta in Form von Punktmustern übereinander zu drucken. Wird die Fläche aus genügender Entfernung betrachtet (die einzelnen Farbpunkte dürfen sich nicht mehr unterscheiden lassen), so entsteht der Eindruck, daß die Fläche der gewünschten Farbe entspricht. Somit lassen sich durch den Übereinanderdruck verschiedener Punktraster aus den drei Grundfarben alle anderen Farbtönungen mischen. Zur Beschleunigung des Druckvorganges und zum Erreichen eines farbtonfreien Schwarzes wird üblicherweise zusätzlich Schwarz als gesonderte Farbe hinzugemischt. Im Prinzip kann Schwarz aus einer Mischung von Gelb, Cyan und Magenta hergestellt werden.

In Bezug auf die Erfindung soll ein Druckwerk verwendet werden, das über eine Mehrfarben-Druckeinrichtung verfügt, z.B. über einen umschaltbaren Trommelkopf mit Farbstiften der drei Grundfarben und eventuell einer oder mehreren zusätzlichen Farben (Schwarz), die von einer Druckersteuereinrichtung in Abhängigkeit der anliegenden Druckdaten gesteuert wird. Anstelle eines mechanischen Druckkopfes kann jedoch auch ein Mehrfarben-Tintenstrahldrucker verwendet werden, bei dem aus mehreren Tintendüsen gleichzeitig oder nacheinander die einzelnen Farben zum Ausdruck gebracht werden. Während es bei dem erstbeschriebenen Druckwerk stets notwendig ist, daß die subtraktive Farbmischung durch Übereinanderdruck mehrerer Punktraster der Grundfarben erfolgt, ist es im zweiten Fall bei bestimmter Ausbildung der Tintendüsen möglich, die Farben vor dem Ausdruck durch Mischung der Farbflüssigkeiten zu vermischen und zum Ausdruck zu bringen. Selbstverständlich kann aber auch, wie bei den Druckern mit Farbstiften oder Farbbändern, mittels eines Folgedruckes von Punktmustern der Farbdruck erfolgen.

Aus der PCT WO—A—81/02 706 ist ein Farbdrucker mit einem Mehrfarbendruckband bekannt, bei welchem die RGB-Signale zeilenweise Punkt für Punkt digitalisiert werden. In einem Speicher sind die zuzuordnenden Anteile der Farben Schwarz, Cyan, Magenta und Gelb in Farbtabellen abgelegt. Durch Vergleich werden Farbton und Intensität für jede Farbe festgelegt und an einen Pulsmodulator ausgegeben, der seinerseits in Abhängigkeit des Grautons die Treiberschaltung für die Druckköpfe der Farben Schwarz, Cyan, Magenta und Gelb ansteuert.

Bei dem Verfahren zur Festlegung der Farbanteile der Subtraktionsfarben wird bei der Ermittlung der entsprechenden Abstufungen auf bestehende Tabellen zurückgegriffen und keine exakte Berechnung der jeweiligen Farbanteile vorgenommen. Dies kann, wenn die Farbtabellen nicht entsprechend festgelegt sind, zu Verfälschungen in der Farbwiedergabe der Subtraktionsfarben führen, so daß hier kein naturgetreues Abbild des Fernsehbildes mehr gegeben ist.

Es ist weiterhin aus der US—A—4,350,996 bekannt, zur Ermittlung der Grautonabstufungen eines abgetasteten Bildes einen A/D-Wandler vorzusehen, dessen digitalisierte Werte in einem Bildspeicher ablegbar sind. Hierbei handelt es sich um einen Scanner, der auf diesem Wege die Ermittlung der Graustufen eines abgetasteten Bildes ermöglicht.

Aus dem Fachbuch Lang, Heinwig: "Farbmetrik und Farbfernsehen", Oldenbourg Verlag München Wien 1978, Seite 392, sind das Additiv- und das Subtraktivverfahren beschrieben und in Bezug auf die Projizierung eines Diapositivs dargestellt. Die Anwendung dieses Verfahrens und insbesondere die Ermittlung der Farbanteilswerte zum originalgetreuen Ausdrucken von Fernsehbildern sind hier nicht angegeben.

Aus der DE—A 29 48 369 ist es bekannt, die Primärfarbsignale RGB eines Fernsehbildes in Drucksignale Y (Gelb), M (Magenta) und C (Cyan) und BK (Schwarz) umzuwandeln. Der Wandler ist über eine Korrekturschaltung mit einem Farbabtaster verbunden, um eine Synchronisation herzustellen. Die aufgezeigte Lösung gibt ebenfalls kein Verfahren zur exakten Umrechnung der RGB-Farben in die Subtraktionsfarben wieder.

Ferner ist aus der älteren Patentanmeldung gemäß DE—A—33 31 911 ein Verfahren zum Erzeugen eines farbiges Ausdruckes eines Fernsehbildes bekannt, bei dem die RGB-Fernsehsignale auf den Farbcode des Druckers umcodiert werden. Eine exakte Berechnung der Farbanteile der Subtraktionsfarben erfolgt auch hier nicht.

Ausgehend von diesem Stand der Technik liegt der Erfindung die Aufgabe zugrunde, ein Verfahren zur exakten Umsetzung der Primärfarben in Subtraktionsfarben anzugeben, um ein nahezu naturgetreues Abbild des Fernsehbildes drucken zu können, insbesondere Bildschirmtextseiten, die mittels eines Bildschirmtextdecoders bzw. eines Videotextdecoders aus den empfangenen Signalen von einer Bildschirmtextzentrale oder vom Sender nach Aufbereitung der Informationen dargestellt werden. Z.B. werden bei dem Bildschirmtextdienst einer Bildschirmtextzentrale über die Telefonleitung digitalcodierte NF-modulierte Zeichen und Attribute eingegeben und nach der Umsetzung in RGB-Signale durch Ansteuerung der Katoden einer Katodenstrahlröhre auf dem Bildschirm zur Anzeige gebracht.

Zur Dokumentation ist es jedoch wünschenswert, diese dargestellten Textseiten farbbildlich auszudrucken, ohne daß dabei die Zeichen- und Inhaltsinformationen verlorengehen.

Die Aufgabe wird erfindungsgemäß nach einem im Anspruch 1 wiedergegebenen Verfahren gelöst.

Vorteilhafte Verfahrensschritte und deren Weiterbildungen sind in den Unteransprüchen angegeben.

Die Erfindung gibt ein Verfahren an, nach welchem die RGB-Anteile des Fernsehbildes jedes einzelnen Bildpunktes in Gelb-, Cyan- und Magenta-Anteile exakt umgerechnet werden, bei deren Ausdruck ein Abbild des Fernsehbildes auf weißem Druckträger entsteht. Hierzu ist es erforderlich, daß die Farbanteile eines jeden Bildpunktes zunächst in definierte Intensitätsstufen unterteilt quantisiert werden. Dies geschieht durch Ermittlung und Erfassung der einzelnen digitalisierten RGB-Anteile. Sofern sie nicht in digitalisierter Form vorliegen, müssen sie zunächst mittels eines A/D-Wandlers digitalisiert werden. Beim Bildschirmtext sind die Stufen durch die Signalübertragung bereits vorgegeben. Es sind 16 Stufen mit je 4 Bit pro Farbe vorgesehen. Mithin sind maximal 4096 Farbvarianten möglich. Für den Farbendruck sind derart viele Stufen jedoch nicht sinnvoll einsetzbar, insbesondere dann nicht, wenn das Format des ausgedruckten Druckträgers relativ klein ist.

Die Praxis hat gezeigt, daß bereits acht Farbstufen eine nahezu originalfarbgetreue Wiedergabe des Fernsehabbildes ermöglichen. In einfacher Weise kann deshalb jede zweite Stufe der 16 RGB-Farbstufen in eine äquivalente Farbstufe der Grundfarben umgesetzt werden. Das erfindungsgemäße Verfahren gibt hierzu die entsprechenden Verfahrensschritte an, um letztendlich die Farbanteile, bezogen auf einem Bildpunkt, auf dem Bildschirm als Druckdaten in einem Speicher abzulegen, der von der Steuereinrichtung des Punktdruckers ausgelesen wird. Die Farbmenge pro Bildpunkt ist dabei in N Stufen dosierbar. Falls die Farbmenge pro Bildpunkt weniger als N Stufen beträgt, werden entsprechend mehrere Bildpunkte zur Darstellung einer Mischfarbe zusammengefaßt ausgewertet.

Bei Druckern mit Trockendruck wird jeder Stufe der N Stufen ein Punkt- oder Strichmuster je Grundfarbe zugeordnet, bei deren Ausdruck ein möglichst kontinuierlicher Übergang von einer Farbfläche mit voller Intensität zur weißen Papierdruckträgerfläche gegeben ist. Beispielhaft seien hier Farbstiftdrucker genannt, bei denen vier Farbstifte, nämlich die drei Grundfarbstifte und ein schwarzer Farbstift, auf einer umschaltbaren Trommel angeordnet sind, die mit der Vorschubrichtung des Druckträgers als Plotter zusammenwirken. In der Regel werden kugelminenförmige Farbstifte verwendet. Es ist verständlich, daß mit einer solchen Anordnung Einzelpunkte praktisch nicht bzw. nicht erkennbar ausgedruckt werden können. Die Punkte werden deshalb in Form von ganz kurzen Strichen—über zwei oder mehrere Teilschritte—in horizontaler Richtung verlaufend dargestellt. Für den Betrachter fließen jedoch die Punktmuster der nacheinander gedruckten Grundfarben ineinander über, so daß aus einer bestimmten Entfernung das Punktraster als solches nicht mehr wahrgenommen wird. Bei bestimmten Tintenstrahldruckern können die Farbanteile direkt vor dem Ausdruck gemischt werden, so daß ein Rasterdruck entfallen kann.

Die Ermittlung der Grundfarbenanteile bzw. der Punktmuster, wie sie nach dem speziellen erfindungsgemäßen Verfahren vorgesehen ist, wird nachfolgend anhand der in Formeln ausgedrückten Verfahrensschritte näher beschrieben.

Folgendes sei definiert:

$N$ = Anzahl der Stufen der digitalisierten RGB-Anteile bzw. Druckfarbenanteile, z.B. 0 bis 15

$N_{rot}$ = Farbanteil der Primärfarbe Rot des RGB-Signals

$N_{grün}$ = Farbanteil der Primärfarbe Grün des RGB-Signals

$N_{blau}$ = Farbanteil der Primärfarbe Blau des RGB-Signals

$N_{RGB\ max}$ = höchster tatsächlicher Wert des Farbanteils einer Primärfarbe bezogen auf einen Punkt

$N_{RGB\ mittel}$=mittlerer tatsächlicher Wert des Farbanteils einer Primärfarbebezogen aufdengleichen Punkt

$N_{RGB\ min}$=niedrigster tatsächlicher Wert des Farbanteils der letzten Primärfarbe bezogen auf einen Punkt

$N_{gelb}$=Farbanteil der Grundfarbe Gelb

$N_{cyan}$=Farbanteil der Grundfarbe Cyan

$N_{magenta}$=Farbanteil der Grundfarbe Magenta

$N_{max}$=ermittelter maximaler Farbanteil der Druckfarbe bzw. Ordnungsnummer des definierten Punktmusters

$N_{mittel}$=ermittelter mittlerer Farbanteil der Druckfarbe bzw. Ordnungsnummer des definierten Punktmusters

$N_{min}$=ermittelter minimaler Farbanteil der Druckfarbe bzw. Ordnungsnummer des definierten Punktmusters

Die Gelb-, Cyan- und Magenta-Grundfarbenanteile bzw. die entsprechenden Punktmuster, unter denen die Grundfarben ausgedruckt werden sollen, ermitteln sich wie folgt:

In einem ersten Verfahrensschritt werden die Grundfarben und die Intensitätsstufen nach folgender Formel ermittelt:

$$N_{rot}+N_{grün}=N_{gelb}$$
$$N_{rot}+N_{blau}=N_{magenta}$$
$$N_{grün}+N_{blau}=N_{cyan}$$

Die so ermittelte größte Summe wird den größten Druckfarbenanteil bzw. das kräftigste Punktmuster bestimmen.

Die mittlere Summe bestimmte den mittleren Druckfarbenanteil bzw. das mittlere Punktmuster.

Die kleinste Summe bestimmt den kleinsten Druckfarbenanteil bzw. das Punktmuster mit der größten Auflösung.

Die tatsächlichen auszudruckenden Farbanteile der Grundfarben bzw. die Ordnungsnummern der auszudruckenden Punktmuster der jeweiligen Farbe werden nach folgender Formel ermittelt:

$$N_{max}=N-N_{RGBmin}$$
$$N_{mittel}=N-N_{RGBmittel}$$
$$N_{min}=N-N_{RGBmax}$$

Hierbei bedeutet N die max. Anzahl der quantisierten Farbmengen bze. Punktmuster der Druckfarben.

Nach den vorgezeigten Verfahren sind die Farbanteile der Grundfarben bestimmt. Normalerweise ist es möglich, mittels dieser Grundfarben alle Farbkomponenten darzustellen. Die Farbtöne bestimmen sich durch die definierten Stufen. Je höher die Stufenzahl und Auflösung ist, desto besser kann der Übergang der Farben dargestellt werden.

Es besteht jedoch auch die Möglichkeit, über die Grundfarben Gelb, Cyan und Magenta hinaus weitere Farben mit auszudrucken (sieben Mehrfarben- Druckeinrichtungen sind üblich und bekannt). Die Anteile dieser Farben werden aus den Farbanteilen der Grundfarben Gelb, Cyan, Magenta wermittelt. Hierzu ist es notwendig, daß gemäß der Lehre der Erfindung zunächst die Druckfarbenanteile bestimmt werden, die der zusätzlichen Farbe entsprechenden sollen. Die Anteile werden mit $N_{GELB\ 1}$, $N_{CYAN\ 1}$ und $N_{MAGENTA\ 1}$ für die erste zusätzliche Farbe bezeichnet. Ist einer der Anteile Null, dann wird er nicht weiter berücksichtigt. Der ursprüngliche Farbanteil ändert sich nicht.

Nach dieser Festlegung werden durch Differenzbildung nach folgender Formel die einzelnen Farbdifferenzwerte festgelegt:

für $N_{GELB\ 1}$, $N_{CYAN\ 1}$, $N_{MAGENTA\ 1}=0$ gilt

$$N_{GELB\ 1}=N_{GELB}=N_{DIFF\ GELB}$$
$$N_{CYAN\ 1}=N_{CYAN}=N_{DIFF\ CYAN}$$
$$N_{MAGENTA\ 1}=N_{MAGENTA}=N_{DIFF\ MAGENTA}$$

Ein Anteil der zusätzlichen Farbe tritt nur dann auf, wenn alle Differenzen größer oder gleich 0 sind. In diesem Fall ist der Anteil der zusätzlichen Farbe $N_{FARBE\ 1}$. Dieser ermittelt sich durch Subtraktion des Dfferenzmaximalwertes von der maximalen Anzahl der definierten Stufen, wobei $N_{DIFF\ MAX}$ die größte Differenz darstellt, die sich bei der Subtraktion nach der vorhergehenden Formal ergeben hat. Die ursprünglichen Farbanteile $N_{GELB}$, $N_{CYAN}$ und $N_{MAGENTA}$ sind bei Ausdruck der zusätzlichen Farbe entsprechend zu ändern. Die neuen Anteile werden mit 2 beziffert. Daraus ergibt sich:

$$N_{GELB\ 2}=N_{GELB}-N_{GELB\ 1}-(N-N_{FARBE\ 1})\ \text{oder}$$
$$N_{GELB\ 2}=N+N_{GELB}-N_{GELB\ 1}-N_{FARBE\ 1}$$
$$N_{CYAN\ 2}=N+N_{CYAN}-C_{CYAN\ 1}=N_{FARBE\ 1}$$
$$N_{MAGENTA\ 2}=N+N_{MAGENTA}-N_{MAGENTA\ 1}=N_{FARBE\ 1}$$

Die Farbanteile $N_{GELB\ 2}$, $N_{CYAN\ 2}$ und $N_{MAGENTA\ 2}$ entsprechen den geänderten Farbanteilen für den Ausdruck der Grundfarben Gelb, Cyan und Magenta, wenn die zusätzliche ermittelte Farbe mit ausgedruckt wird. Die neue Farbe bzw. das neue Punktmuster werden jedoch nur dann eingesetzt, wenn sich damit die Anzahl der unterschiedlichen Farben verkleinert bzw. bei geschlossenen Liniendarstellungen eine einheitliche Farbdarstellung gewünscht ist.

Das erfindungsgemäße Verfahren sei nachfolgend anhand eines Ausführungsbeispiels, bei dem das auf einem Bildschirm dargestellte Bildschirmtextbild ausgedruckt werden soll, näher beschrieben.

Bei der Darstellung von Btx-Farbseiten die aus einer Bildschirmtextzentrale empfangen werden, liegen die Farbinformationen bereits in digitaler Form als Attribute vor. Die Norm sieht dabei 16 Teilschritte je Grundfarbe vor, so daß insgesamt 4096 verschiedene Farbnuancen möglich sind. Grundsätzlich sind diese 4096 Möglichkeiten auch beim Druckverfahren nachbildbar. Es zeigt sich aber, daß hier eine Einschränkung durchaus zulässig und im Hinblick auf die Ausdruckzeit mittels eines Punktdruckers wünschenswert ist, da viele dieser 4096 Farben so eng beieinander liegen, daß sie nicht unterschieden werden müssen das Druckverfahren ist es deshalb angebracht, die Farbabstufungen auf acht Stufen zu reduzieren, wodurch sich 512 unterschiedliche Farbnuancen beim Ausdruck ergeben. Die 512 Farbnuancen sind entweder durch direkte Farbmischung oder durch das Ausdrucken acht verschiedener Punktmuster und deren Überlagerung darstellbar. Wichtig ist dabei, daß die Rasterung nicht zu grob wird. Beschränkt man sich jedoch nicht nur auf die drei Grundfarben und wählt eine solche Mehrfarben-Druckeinrichtung, die das Ausdrucken weiterer Farben gestattet, so ist es grundsätzlich möglich, auch mittels Punktmuster mehr als 512 Farbnuancen darzustellen. Für die Praxis ist die Anzahl der Farbnuancen für ein Druckbild jedoch ausreichend. Dies liegt allein darin, daß das Bildschirmtextbild, wie es die Norm vorsieht, nur mittels 32 unterschiedlicher Farben in einem Bild aufgebaut werden kann. Es ist deshalb ausreichend, die 32 unterschiedlichen Farben in 512 Farbvarianten darzustellen. Zunächst muß aber für den Ausdruck ein Zeichenfeld auf dem Druckträger definiert werden. Dieses beträgt bei einem Drucker mit einer Papierbreite der Btx-Seite von 96 mm 2,4 mm horizontal und 3 mm vertikal. Es ist bekannt, daß bei RGB-Druckern üblicherweise neben einem Zeichenspeicher auch ein Bildspeicher für ein Video-Vollbild vorhanden sein müßte. Ohne Bildspeicher müßte das Bild so lange anstehen, bis der Druckvorgang beendet ist. Im Grunde könnte mit einem normalen RGB-Drucker ohne Bildspeicher nur ein Standbild ausgedruckt werden. Für die Ablage einer Btx-Seite ist jedoch ein Seitenspeicher mit einer Kapazität von 8 kByte ausreichend, für ein Videobild hingegen viel zu klein, da ein Videobild in etwa die 20fache Speicherkapazität benötigt. Selbstverständlich ist das Verfahren auch kann einsetzbar, wenn die Ablage der digitalen Information in einem Vollbildspeicher erfolgt. In der praktischen Anwendung für den Bildschirmtext reicht jedoch die Speicherkapazität von 8 kByte eines Seitenspeichers im Bildschirmtextdecoder aus.

Bevor das Verfahren zum Umsetzen der RGB-Farbanteile bei der Wiedergabe der Bildschirmtextseite in die entsprechenden Punktmuster des Druckers genauer erklärt wird, sie noch auf die Punktmuster selbst eingegangen. Die acht Punktmuster, die vom Drucker auf weißem Untergrund ausgedruckt werden sollen, entsprechen den acht Stufen der Farbattribute. Werden den acht Punktmustern Zahlen 0 bis 7 zugeordnet, so bedeutet 7 das dichteste Muster, also die gesättigte Farbe oder ein mit dem schwarzen Stift geschriebenes schwarzes Vollfeld. Das Punktmuster 6 ist ein Muster, bei dem etwa ein Drittel des Untergrundes durchscheint. Beim Punktmuster 5 wird einer von vier Punkten des Feldes bedruckt. Beim Punktmuster 4 werden 3 von 16 Punkten des Vollfeldes gedruckt, beim Punktmuster 3 einer von acht, beim Punktmuster 2 einer von 12 und beim Punktmuster 1 einer von 24. Punktmuster 0 ist das leere, also das weiße Feld des Druckträgers. Es zeigte sich, daß im Druckbild die helleren Punktmuster, also vom Punktmuster 5 bis 1, besser aussehen, wenn die Punkte, die in horizontalen Linien geschrieben werden, dargestellt sind. Für kräftigere Farben der Punktmuster 6 und 7 empfehlen sich andere Druckstrukturen, was jedoch nicht unbedingt zwingend notwendig ist. Hellere Farben werden statt als Vollfeld in einem der entsprechenden helleren Punktmuster dargestellt. Dunklere Farben werden dargestellt, indem ein Vollfeld mit schwarzem Punktmuster überdruckt wird. Da Schwarz als Deckfarbe angesehen werden muß und nicht transparent ist, müssen die schwarzen Punkte im Zwischenraum zwischen benachbarten Punkten der farbigen Punktmuster der Grundfarben liegen. Mischfarben werden dargestellt, indem über ein Vollfeld mit einer bestimmten Grundfarbe ein Punktmuster mit einer anderen Farbe gedruckt wird. Damit sind relativ kontinuierliche Übergänge zwischen den einzelnen Grundfarben möglich. Ein tatsächlicher Ausdruck der Farben zeigt, daß die Farbnuancen größtenteils noch deutlich sichtbar sind. Es gibt nur einige wenige Farben, z.B. im Bereich des rötlichen Magenta, wo zwei, drei Farbtöne mehr zu unterscheiden sind.

Im folgenden wird angegeben, wie die Punktmuster aus den Farbanteilen der Fernsehfarben RGB bestimmt werden.

Das schwarze Punktmuster ist aus den maximalen RGB-Farbanteilen anzugeben. Jede der drei Grundfarben RGB ist in acht Stufen unterteilt. Diese werden mit den geraden Zahlen von 0 bis 14 bezeichnet, was sich aus den 16 Farbstufen des Btx-Systems ergibt. Das schwarze Punktmuster wird folgendermaßen festgelegt:

Ist der größte Anteil der drei Farben oder auch mehrerer Farben 14, dann ist das schwarze Punktmuster 0.

Ist der maximale Anteil der RGB-Farben 12, dann ist das Punktmuster der Farbe Schwarz 1.

Ist der Anteil 10, dann wird das Punktmuster 2,

bei 8 das Punktmuster 3, bei 6 das Punktmuster 4,

bei 4 das Punktmuster 5, bei 2 das Punktmuster 6 und

bei 0 das Punktmuster 7 ausgedruckt, d.h. in diesem Fall ist das Feld schwarz.

Als nächstes wird diejenige Farbe bestimmt, die nicht gedruckt werden soll. Es werden immer höchstens drei bis vier der möglichen Farben für die Darstellung der Farbe benötigt, so daß ein Gelb-, Cyan- und Magenta-Anteil immer 0 ist. Dies bestimmen die beiden kleinsten Farbanteile der RGB-Farben. Sind Rot und Grün kleinsten RGB-Anteile, dann enthält die Farbe kein Gelb. Sind Rot und Blau die kleinsten Farbanteile, dann enthält die Farbe kein Magenta. Sind Blau und Grün die kleinsten Farbanteile, dann enthält die Farbe kein Cyan.

In einem weiteren Verfahrensschritt wird die Farbe bestimmt, die das höherwertigste Punktmuster hat. Sie ergibt sich aus den beiden größten Farbanteilen der RGB-Farben.

Weisen Rot und Grün die größten Farbanteile auf, dann ist das höherwertigste Punktmuster Gelb.

Weisen hingegen Rot und Blau die größten Farbanteile auf, dann ist das höchste Punktmuster Magenta.

Sind Blau und Grün der größte Farbanteil, dann ist das höchste Punktmuster Cyan.

Weiterhin muß noch bestimmt werden, in welchem Punktmuster die ermittelte Grundfarbe ausgedruckt werden muß.

Das Punktmuster ergibt sich aus den vorkommenden minimalen Farbanteilen der RGB-Farben. Ist der minimale Anteil der RGB-Farben 0, dann wird die zuvor ermittelte Farbe im Punktmuster 7 gedruckt. Ist der minimale Farbanteil 2, dann wird er mit 6 gedruckt usw. Ist der minimale Farbanteil 14, dann wird er mit 0 gedruckt, d.h. die weiße Druckfläche bleibt unbedruckt.

In einem letzten Verfahrensschritt ist noch zu ermitteln, in welchem Punktmuster die vierte Farbe ausgedruckt werden soll. Dazu gilgt folgende Vorschrift:

Ist der Wert des mittleren Farbanteils 0, dann wird die vierte Farbe im Punktmuster 7 gedruckt. Ist der Wert des mittleren Farbanteils 2, so wird sie mit Punktmuster 6 gedruckt usw. Ist die Größe des mittleren Farbanteils 14, dann wird die Farbe nicht gedruckt.

Das Verfahren ist für jeden Mehrfarbendrucker anwendbar. Abhängig von der Mechanik und der Druckeinrichtung sind lediglich die Punktmuster. Sie ergeben sich aus der Größe des Punktes oder des Striches, der z.B. mit einem Kugelschreiberstift darstellbar ist, und der Größe des definierten Zeichenfeldes. Die Darstellung wird um so günstiger je kleiner die minimal mögliche Punktgröße ist. Bei handelsüblichen Kugelschreiberdruckern müssen Punktgrößen von 0,2 mm×0,3 mm angesetzt werden, womit eine minimale Farbauflösung ermöglicht wird.

# EP 0 159 675 B1

Die nachfolgende Tabelle gibt einen Ausschnitt aus den Varianten beim Bildschirmtextseitenausdruck wieder.

| R | G | B | G | M | C | S |
|---|---|---|---|---|---|---|
| 0 | 0 | 0 | 0 | 0 | 0 | 7 |
| 0 | 0 | 2 | 0 | 7 | 7 | 6 |
| 0 | 0 | 4 | 0 | 7 | 7 | 5 |
| 0 | 0 | 6 | 0 | 7 | 7 | 4 |
| 0 | 0 | 8 | 0 | 7 | 7 | 3 |
| 0 | 0 | 10 | 0 | 7 | 7 | 2 |
| 0 | 0 | 12 | 0 | 7 | 7 | 1 |
| 0 | 0 | 14 | 0 | 7 | 7 | 0 |
| 4 | 6 | 0 | 7 | 0 | 5 | 4 |
| 4 | 6 | 2 | 6 | 0 | 5 | 4 |
| 4 | 6 | 4 | 5 | 0 | 5 | 4 |
| 4 | 6 | 6 | 0 | 0 | 5 | 4 |
| 4 | 6 | 8 | 0 | 4 | 5 | 3 |
| 4 | 6 | 10 | 0 | 4 | 5 | 2 |
| 4 | 6 | 12 | 0 | 4 | 5 | 1 |
| 4 | 6 | 14 | 0 | 4 | 5 | 0 |
| 10 | 8 | 0 | 7 | 3 | 0 | 2 |
| 10 | 8 | 2 | 6 | 3 | 0 | 2 |
| 10 | 8 | 4 | 5 | 3 | 0 | 2 |
| 10 | 8 | 6 | 4 | 3 | 0 | 2 |
| 10 | 8 | 8 | 3 | 3 | 0 | 2 |
| 10 | 8 | 10 | 0 | 3 | 0 | 2 |
| 10 | 8 | 12 | 0 | 3 | 2 | 1 |
| 10 | 8 | 14 | 0 | 3 | 2 | 0 |
| 14 | 14 | 0 | 7 | 0 | 0 | 0 |
| 14 | 14 | 2 | 6 | 0 | 0 | 0 |
| 14 | 14 | 4 | 5 | 0 | 0 | 0 |
| 14 | 14 | 6 | 4 | 0 | 0 | 0 |
| 14 | 14 | 8 | 3 | 0 | 0 | 0 |
| 14 | 14 | 10 | 2 | 0 | 0 | 0 |
| 14 | 14 | 12 | 1 | 0 | 0 | 0 |
| 14 | 14 | 14 | 0 | 0 | 0 | 0 |

## Patentansprüche

1. Verfahren zum Ausdrucken eines farbigen Fernsehbildes durch subtraktive Farbmischung der Druckfarben Gelb, Magenta und Cyan und gegebenenfalls mit weiteren Farben, die aus den digitalisierten, wertmäßig in festgelegten Intensitätsstufen N quantisierten Farbsignalen Rot, Grün und Blau ermittelt werden, mittels eines Mehrfarbenpunktfolgedruckers mit Speichern, in denen die den auszudrukkenden Druckfarben und weiteren Farben zugeordneten Druckdaten für die Steuerung der Mehrfarbendruckeinrichtung gespeichert sind, wobei der Ausdruck auf einem weißen Druckträger erfolgt, gekennzeichnet durch folgende Verfahrensschritte:

a) Die quantitative Zuordnung der Farbanteile der Druckfarben, bezogen auf einen auszudruckenden Bildpunkt, wird aus den Summenverhältnissen der wertmäßig erfaßten quantisierten Farbanteile der RGB-Farben nach folgender Formel ermittelt:

$$N_{rot} + N_{grün} = N_{gelb}$$
$$N_{rot} + N_{blau} = N_{magenta}$$
$$N_{grün} + N_{blau} = N_{cyan}$$

b) Die ermittelten Summen werden miteinander verglichen, wobei die größte Summe den größten Farbanteil (Nmax), die mittlere Summe den mittleren Farbanteil (Nmittel) und die kleinste Summe den kleinsten Farbanteil (Nmin) der Druckfarben bilden.

c) Die Farbanteile der auszudruckenden Druckfarben untereinander werden wertmäßig durch Subtraktion der tatsächlichen Mindest-, Mittel- und maximalen Farbanteile der RGB-Fernsehbildfarben in einem Darstellungspunkt von der maximal festgelegten Stufenzahl N nach folgender Formel ermittelt:

$$N_{max} = N - N_{RGBmin}$$
$$N_{mittel} = N - N_{RGBmittel}$$
$$N_{min} = N - N_{RGBmax}$$

7

d) Die so ermittelten, den Farbanteilen der Druckfarbe im jeweiligen Darstellungspunkt zugeordneten Druckdaten werden in den Speicher eingelesen und von der Druckersteuereinrichtung zum Ausdrucken des Darstellungspunktes ausgelesen und an die Mehrfarbendruckeinrichtung ausgegeben.

2. Verfahren nach Anspruch 1 in Verbindung mit einem Mehrfarben-Tintenstrahldrucker, dadurch gekennzeichnet, daß die transparenten Tinten im Verhältnis der ermittelten Farbanteile mengenmäßig vermischt ausgedruckt werden.

3. Verfahren nach Anspruch 1 oder 2 in Verbindung mit einer Mehrfarben-Druckeinrichtung, die Vorrichtungen zur Wiedergabe der Grundfarben und zusätzlicher Farben aufweist, gekennzeichnet durch folgende Verfahrensschritte:

a) Die zusätzlichen Druckfarben werden aufgrund der Anteile der Druckgrundfarben definiert,

$$\text{z.B. } N_{schwarz} \triangleq N_{gelb\ max} + N_{cyan\ max} + N_{magenta\ max}$$

b) Von den definierten Anteilen der den zusätzlichen Druckfarben entsprechenden Druckgrundfarben, die größer Null sind—jeweils auf einen Darstellungspunkt bezogen —, werden die jeweiligen wertmäßig nach Anspruch 1 ermittelten Anteile der Grundfarben subtrahiert.

c) Der wertmäßige Anteil der zusätzliche Farbe wird durch Subtraktion der nach b) ermittelten höchsten Differenzstufenzahl von der maximalen Stufenzahl der Farbanteile ermittelt, wobei der Farbanteil der zusätzlichen Farbe nur dann ausgedruckt wird, wenn alle nach b) gebildeten Differenzen größer oder gleich Null sind.

d) Die Grundfarbenanteile werden nach der Ermittlung des Anteils der Zusatzfarbe ermittelt, indem von der Summe aus der maximalen Stufenzahl einer Grundfarbe und dem nach Anspruch 1 ermittelten Grundfarbenanteil die Werte des definierten Anteils der jeweiligen Grundfarbe, bei dem die zusätzliche Farbe ausgedruckt werden soll, und der Anteil der zusätzlichen Farbe subtrahiert werden.

4. Verfahren nach Anspruch 3, dadurch gekennzeichnet, daß die ermittelten neuen Anteile der Grundfarben nur dann ausgedruckt werden, wenn sich damit Anzahl der auszudruckenden Farben verkleinert.

5. Verfahren nach einem der vorhergehenden Ansprüche, gekennzeichnet durch folgende Verfahrensschritte:

a) Jedem Wert eines Farbanteils wird ein bestimmtes Punktmuster, in welchem die ermittelte, den RGB-Farben zugeordnete Grundfarbe ausgedruckt werden soll, zugeordnet, wobei das dichteste Punktmuster der gesättigten Druckfarbe oder der Farbe Schwarz auf weißem Hintergrund und das gröbste Punktmuster der ungesättigsten Druckfarbe entsprechen.

b) Die Anzahl der Stufen des Punktmusters entspricht der definierten Anzahl der Stufen der Farbanteile der RGB-Farben des Fernsehbildes.

c) Ein Zeichenfeld, innerhalb dessen die verschiedenen Punktmuster ausgedruckt werden, wird definiert, dieses muß mindestens so groß sein, daß das gröbste Punktmuster ausdrucker ist.

d) Das schwarze Punktmuster weist ein solches Raster auf, daß es in die Zwischenräume der übereinander gedruckten Punktmuster der Grundfarben fällt.

6. Verfahren nach Anspruch 5, dadurch gekennzeichnet, daß bei Verwendung von Deckfarben die Punktraster für die einzelnen Druckfarben gegeneinander verschoben angeordnet sind, derart, daß die benachbarten Punkte nicht übereinandergeschrieben werden.

7. Verfahren nach Anspruch 5 oder 6, dadurch gekennzeichnet, daß bei Verwendung von transparenten Farben das Punktraster so gewählt ist, daß die ausgedruckten Grundfarben mindestens teilweise übereinandergeschrieben werden.

8. Verfahren nach einem der Ansprüche 5 bis 7 in Verbindung mit einem Mehrfarbendrucker mit Farbstiften, dadurch gekennzeichnet, daß das Punktmuster durch die minimale Strichgröße der zu schreibenden Striche geprägt ist.

9. Verfahren nach Anspruch 6, dadurch gekennzeichnet, daß die Abstufung der Punktmuster durch die Zwischenräume zwischen benachbarten Punkten gegeben ist.

10. Verfahren nach einem der vorhergehenden Ansprüche, dadurch gekennzeichnet, daß die Anzahl der Farbstufen der RGB-Farben gleich groß denen der Grundfarben oder ein ganzes Vielfaches dieser ist.

11. Verfahren nach Anspruch 10 zum Ausdrucken von auf einem Bildschrim dargestelltem Bildschirmtext, dadurch gekennzeichnet, daß jede Farbe der RGB-Farben in 16 Stufen abgestuft ist, die Auswertung jedoch nur in 8 Stufen erfolgt.

## Revendications

1. Procédé pour imprimer une image de télévision couleur par mélange soustractif des couleurs d'impression jaune, magenta et cyan et éventuellement avec d'autres couleurs qui sont calculées à partir des signaux de couleurs rouge, vert et bleu numérisés et quantifiés en valeurs dans des degrés d'intensité N fixés, au moyen d'une imprimante sérielle par points polychrome, comportant des mémoires dans lesquelles sont mémorisées des données d'impression associées aux couleurs d'impression à imprimer et à d'autres couleurs, et qui servent à commander le dispositif d'impression polychrome, l'impression s'effectuant sur un support d'impression blanc caractérisé par les étapes suivantes:

a) l'association quantitative des intensités des couleurs d'impression, rapportées à un point image à imprimer, est calculée à partir des rapports de somme des intensités quantifiées, captées en valeur, des couleurs RVB, conformément à la formule suivante:

$$R_{rouge} + N_{vert} = N_{jaune}$$
$$N_{rouge} + N_{bleu} = N_{magenta}$$
$$N_{vert} + N_{bleu} = N_{cyan}$$

b) les sommes calculées sont comparées entre elles, la somme maximale à l'intensité maximale (Nmax), la somme moyenne à l'intensité moyenne (Nmoyenne) et la somme minimale à l'intensité minimale (Nmin) des couleurs d'impression.

c) les intensités des couleurs d'impression à imprimer sont calculées les unes sous les autres en valeur par soustraction des intensités réelles minimales, moyennes et maximales des couleurs RVB de l'image de télévision dans un point de reproduction du nombre d'étages maximal fixé N, conforment à la formule suivante:

$$N_{max} = N - N_{RVBmin}$$
$$M_{moyenne} = N - N_{RVBmoyen}$$
$$N_{min} = N - N_{RVBmax}$$

d) les données d'impression ainsi calculées, associées aux intensités de la couleur d'impression dans un point de reproduction donné sont introduites dans la mémoire et lues dans la mémoire par le dispositif de commande de l'imprimante pour imprimer le point de reproduction, et envoyées au dispositif d'impression polychrome.

2. Procédé selon la revendication 1, en combinaison avec une imprimante à jet d'encre polychrome, caractérisé en ce que les encres transparentes sont imprimées mélangées quantitativement dans le rapport des intensités calculées.

3. Procédé selon la revendication 1 ou 2, en combinaison avec un dispositif d'impression polychrome qui possède des dispositifs pour la reproduction des couleurs fondamentales et des couleurs additionnelles, caractérisé par les étapes suivantes:

a) les couleurs d'impression additionnelles sont définies sur la base des intensités des couleurs fondamentales d'impressions, par exemple

$$N_{noir} = J_{jaune\ max} + N_{cyan\ max} + N_{magenta\ max}$$

b) des intensités définies des couleurs fondamentales d'impression qui correspondent aux couleurs d'impression additionnelles, qui sont supérieures à 0—rapportées à un point de reproduction—on soustrait les intensités des couleurs fondamentales calculées en valeur conformément à la revendication 1,

c) l'intensité en valeur de la couleur additionnelle est calculée par la soustraction du nombre maximum de degrés de différence calculés à partir du nombre de degrés maximum des intensités de couleurs, l'intensité de la couleur additionnelle d'étant imprimée que lorsque toutes les différences formées conformément à b) sont supérieures ou égales à zéro,

d) les intensités des couleurs fondamentales sont calculées d'après le calcul de l'intensité de la couleur additionnelle, en ce sens que, de la somme formée du nombre de degrés maximum d'une couleur fondamentale et de l'intensité de couleur fondamentale calculée conformément à la revendication 1, on soustrait les valeurs de l'intemsité définie de la couleur fondamentale considérée à laquelle la couleur additionnelle doit être imprimée, et l'intensité de la couleur additionnelle.

4. Procédé selon la revendication 3, caractérisé en ce que les nouvelles intensités calculées des couleurs fondamentales ne sont imprimées que lorsque ceci ne réduit pas le nombre de couleurs à imprimer.

5. Procédé selon une des revendications précédentes, caractérisé par les étapes suivantes:

a) à chaque valeur d'une intensité on associe un dessin de points donné dans lequel la couleur fondamentale calculée, associée aux couleurs RVB, doit être imprimée, le dessin de points le plus dense correspondant à la couleur d'impression saturée ou à la couleur noire sur fond blanc et le dessin de points le plus grossier correspondant à la couleur d'impression la moins saturée,

b) le nombre de degrés de dessins de points correspond au nombre défini des degrés de l'intensité des couleurs RVB de l'image de télévision,

c) on définit un champ de signes à l'intérieur duquel les différents dessins de points sont imprimés, ce champ devant être au minimum suffisamment grand pour que le dessin de points le plus grossier puisse être imprimé,

d) le dessin de points noir possède une trame telle qu'il tombe dans les intervalles des dessins de points des couleurs fondamentales qui sont imprimés les uns sur les autres.

6. Procédé selon la revendication 5, caractérisé en ce que, lorsqu'on utilise des couleurs couvrantes, les trames, les trames de points pour les différentes couleurs d'impression sont disposées décalées les unes par rapport aux autres de telle manière que les points voisins ne se chevauchent pas.

7. Procédé selon la revendication 5 ou 6, caractérisé en ce que, dans le cas de l'utilisation de couleurs

# EP 0 159 675 B1

transparentes, la trame de points est choisie de manière que les couleurs fondamentales imprimées se chevauchement au moins partiellement.

8. Procédé selon une des revendications 1 à 7 en combinaison avec une imprimante polychrome à crayon de couleur, caractérisé en ce que le dessin de points est défini par la dimension de traits minimum des traits à imprimer.

9. Procédé selon la revendication 6, caractérisé en ce que l'échelonnement des dessins de points est fixé par des intervalles entre points voisins.

10. Procédé selon une des revendications précédentes, caractérisé en ce que le nombre des degrés des couleurs RVB est égal à celui des couleurs fondamentales ou à un multiple entier de celui-ci.

11. Procédé selon la revendication 10, pour imprimer un télétexte apparaissant sur un écran, caractérisé en ce que chacune des couleurs RVB est échelonnée en 16 degrés mais que l'analyse ne s'effectue qu'en 8 degrés.

## Claims

1. Method for printing-out a coloured television image by subtractive colour mixing of the printing colours yellow, magenta and cyan and in a given case with further colours which are determined from the digitalised colour signals red, green and blue quantised according to value in fixed intensity stages N, by means of a multicolor dot sequence printer with stores, in which the printing data, which are associated with the printing colours and further colours to be printed out, for the control of the multicolour printing equipment are stored, wherein the print-out takes place on a white print carrier, characterised by the following method steps:

a) The quantitative correlation of the colour proportions of the printing colours relating to an image dot to be printed out is determined from the sum conditions of the colour proportions, detected according to value and quantised, of the RGB-colours according to the following formula:

$$N_{red}+N_{green}=N_{yellow,}$$
$$N_{red}+N_{blue}=N_{magenta} \text{ and}$$
$$N_{green}+N_{blue}=N_{cyan}$$

b) The sums determined are compared one with the other, wherein the greatest sum forms the greatest colour proportion (Nmax), the medium sum forms the medium colour proportion (Nmedium) and the smallest sum forms the smallest colour proportion (Nmin),

c) The colour proportions of the printing colours to printed out one among the other are determined in value by subtraction of the actual minimum, medium and maximum colour proportions of the RGB-colours of the television image in an image dot from the fixed maximum step number N according to the following formula:

$$N_{max}=N-N_{RGBmin,}$$
$$N_{medium}=N-N_{RGBmedium,} \text{ and}$$
$$N_{min}=N-N_{RGBmax,}$$

d) The printing data, which have been thus determined and are associated with the colour proportions of the printing colour in the respective image point, are entered into the store and read out by the printing control equipment for the printing-out of the image dot and issued to the multicolour printing equipment.

2. Method according to claim 1 in conjunction with a multicolor ink jet printer, characterised thereby, that the transparent inks are printed out mixed in quantity in the ratio of the colour proportions determined.

3. Method according to claim 1 or 2 in conjunction with a multicolor printing equipment which displays devices for the reproduction of the primary colours and additional colours, characterised by the following method steps:

a) The additional printing colours are defined on the basis of the proportions of the primary printing colours, for example

$$N_{black} \triangleq N_{yellow\ max}+N_{cyan\ max}+N_{magenta\ max,}$$

b) The respective proportions, determined in value according to claim 1, of the primary colours are subtracted—each time in relation to a respective image dot—from those defined proportions of the primary printing colours corresponding to the additional printing colours, that are greater than zero.

c) The proportion, in terms of value, of the additional colour is determined by subtraction of the highest difference in number of steps determined according to (b) from the maximum step number of the colour proportions, wherein the colour proportion of the additional colour is printed out only when all differences formed according to (b) are greater than or equal to zero,

d) The primary colour proportions are determined after the determination of the proportion of the additional colour in that the values of the defined proportion of the respective primary colour, for which the additional colour shall be printed out, and the proportion of the additional colour are subtracted from the sum of the maximum step number of a primary colour and the primary colour proportion determined according to claim 1.

4. Method according to claim 3, characterised thereby, that the determined new proportions of the primary colours are printed only when the number of the colours to be printed out is reduced thereby.

5. Method according to one of the preceding claims, characterised by the following method steps:

a) Each value of a colour proportion is allocated a certain dot pattern, in which the determined primary colour associated with the RGB-colours shall be printed out, wherein the densest dot pattern corresponds to the saturated printing colour or to the colour black on white background and the coarsest dot pattern corresponds to the unsaturated printing colour.

b) The number of the steps of the dot pattern corresponds to the defined number of the steps of the colour proportions of the RGB-colours of the television image,

c) A signal grid, within which the different dot patterns are printed out, is defined and must be at least so large that the coarsest dot pattern can be printed out,

d) The black dot pattern displays such a raster that it falls into the spaces between the dot patterns of the primary colours printed one on top of the other.

6. Method according to claim 5, characterised thereby, that on the use of opaque inks, the dot rasters for the individual printing colours are arranged one displaced relative to the other in such a manner that the neighbouring dots are not written one on top of the other.

7. Method according to claim 5 or 6, characterised thereby, that on the use of transparent inks, the dot raster is so chosen that the printed-out primary colours are at least partially written one on top of the other.

8. Method according to one of the claims 5 to 7 in conjunction with a multicolour printer with coloured stylii, characterised thereby, that the dot pattern is coined by the minimum stroke width of the stroke to be written.

9. Method according to claim 6, characterised thereby, that the pitch of the dot patterns is given by the spaces between neighbouring dots.

10. Method according to one of the preceding claims, characterised thereby, that the number of the colour steps of the RGB-colours is equally large as those of the primary colours or an integral multiple thereof.

11. Method according to claim 10 for printing-out an image screen text represented on an image screen, characterised thereby, that each colour of the RGB-colours is stepped in 16 steps, the evaluation however taking place in only 8 steps.